(19)

**Europäisches Patentamt**
**European Patent Office**
**Office européen des brevets**

(11) **EP 2 007 026 B1**

(12) **EUROPEAN PATENT SPECIFICATION**

(45) Date of publication and mention
of the grant of the patent:
**11.01.2012 Bulletin 2012/02**

(51) Int Cl.:
**H04B 7/06** (2006.01)

(21) Application number: **07011956.5**

(22) Date of filing: **19.06.2007**

(54) **Method for transmitting symbols encoded in a hybrid MIMO transceiver scheme, transmitter, receiver, and MIMO system**

Verfahren zur Übertragung von in einem hybriden MIMO-Transceiver-Schema kodierten Symbolen, Sender, Empfänger und MIMO-System

Procédé pour la transmission de symboles codés dans un schéma d'émetteur-récepteur MIMO hybride, émetteur, récepteur et système MIMO

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**24.12.2008 Bulletin 2008/52**

(73) Proprietor: **Alcatel Lucent**
**75007 Paris (FR)**

(72) Inventors:
• **Yu, Kai**
**Swindon**
**Wiltshire SN5 6AS (GB)**
• **Alexiou, Angeliki**
**Swindon**
**Wiltshire SN5 5FH (GB)**

(74) Representative: **Schmidt, Werner Karl**
**Alcatel Lucent**
**Intellectual Property & Standards**
**70430 Stuttgart (DE)**

(56) References cited:
**EP-A- 1 505 758      EP-A- 1 619 809**
**WO-A-2005/069505**

• **SHIM S ET AL: "AN EFFICIENT ANTENNA SHUFFLING SCHEME FOR A DSTTD SYSTEM" February 2005 (2005-02), IEEE COMMUNICATIONS LETTERS, IEEE SERVICE CENTER, PISCATAWAY, NJ, US, PAGE(S) 124-126 , XP001223119 ISSN: 1089-7798 * paragraph [000I] - paragraph [0III]; figure 1 ***
• **XIANGYANG ZHUANG ET AL: "Transmit diversity and spatial multiplexing in four-transmit-antenna OFDM" 11 May 2003 (2003-05-11), ICC 2003. 2003 IEEE INTERNATIONAL CONFERENCE ON COMMUNICATIONS. ANCHORAGE, AK, MAY 11 - 15, 2003, IEEE INTERNATIONAL CONFERENCE ON COMMUNICATIONS, NEW YORK, NY : IEEE, US, PAGE(S) 2316-2320 , XP010642860 ISBN: 0-7803-7802-4 * paragraph [000I] - paragraph [00II]; figure 1 ***

EP 2 007 026 B1

**Description**

Background of the invention

The invention relates to a method for transmitting, in at least two symbol periods, a plurality of encoded symbols from a plurality of transmitter antennas at a transmitter end of a MIMO system to a plurality of receiver antennas at a receiver end of the MIMO system, the symbols being encoded using a combination of space-time coding and spatial multiplexing in a hybrid MIMO transceiver scheme which can be expressed using an effective MIMO channel matrix, the method comprising the steps of: allocating the encoded symbols to the transmitter antennas based on information provided from the receiver end to the transmitter end of the MIMO system in a feed-back loop, and transmitting the encoded symbols allocated to the transmitter antennas from the transmitter end to the receiver end of the MIMO system. The invention further relates to a transmitter for a MIMO system, to a receiver for a MIMO system, and to a MIMO system.

Wireless broadband systems equipped with antenna arrays at both the transmitter end and the receiver end (so called Multiple-Input/Multiple-Output (MIMO)-systems) have attracted much attention both in academia and industry recently. In MIMO systems, MIMO transceiver schemes are used for data transmission from the antennas at the transmitter end to the antennas at the receiver end. Such MIMO transceiver schemes are known to provide two main types of gains: spatial multiplexing (SM) gain and diversity gain. Spatial multiplexing gain describes the higher data rates that can be obtained using spatial multiplexing for transmitting multiple data streams at the same time via multiple antennas. Diversity transceiver schemes use space-time block codes, in particular orthogonal space-time block codes (OSTBC), and are concerned with diversity gain, i.e. their objective is to increase the link reliability against fading. Hence, compared to the traditional systems using a single transmit/receive antenna, using antenna arrays increases the system capacity and/or lowers the bit error rate (BER).

So-called hybrid MIMO transceiver schemes have been proposed to provide a trade-off between the spatial multiplexing gain of a pure spatial multiplexing scheme and the diversity gain of a pure OSTBC scheme. In principle, the OSTBCs achieve full diversity by transmitting symbols coded across the space, while the SM scheme transmits multiple streams at the same time via multiple antennas. For decoding the OSTBC encoded symbols at the receiver end of the MIMO system, the MIMO channels can be rewritten as an equivalent Single-Input/Single-Output (SISO) channel by exploiting the orthogonality of the OSTBCs. For decoding the spatial multiplexing, both linear (zero-forcing (ZF) or minimum-mean-square-error (MMSE)) or nonlinear receivers, e.g. of the vertical Bell laboratories layered space-time (VBLAST) type, can be used at the receiver end.

For MIMO systems with four transmitter antennas, the main idea of the hybrid MIMO transmission scheme is to group two antennas together so that there are two sets of antenna pairs. The SM scheme is used between the two sets of antenna pairs, while within each antenna pair, a special space-time coding scheme called the Alamouti scheme is deployed. Let us assume the MIMO channels $\mathbf{H} = [\mathbf{h_1}, \mathbf{h_2}, \mathbf{h_3}, \mathbf{h_4}]$ are stationary for two consecutive symbol periods, where $\mathbf{h_k}$ is the channel vector associated with transmitter antenna $k$ ($k$ = 1, 2, 3, 4). In the first symbol period, the transmitted symbol vector is $\mathbf{s} = [s_1, s_2, s_3, s_4]^T$, where $(\cdot)^T$ denotes the transpose. The transmitter transmits

$$\widetilde{\mathbf{s}} = [s_2^*, -s_1^*, s_4^*, -s_3^*]^T$$ in the second symbol period where $(\cdot)^*$ is the complex conjugate. Using the effective MIMO channel matrix $H_{hyb}$, the input-output relationship can be written as

$$\begin{bmatrix} \mathbf{r_1} \\ \mathbf{r_2^*} \end{bmatrix} = \sqrt{\frac{E_s}{4}} \mathbf{H}_{hyb} \mathbf{s} + \begin{bmatrix} \mathbf{n_1} \\ \mathbf{n_2^*} \end{bmatrix},$$

where the effective MIMO channel matrix $H_{hyb}$ is

$$\mathbf{H}_{hyb} = \begin{bmatrix} \mathbf{h_1} & \mathbf{h_2} & \mathbf{h_3} & \mathbf{h_4} \\ \mathbf{h_2^*} & -\mathbf{h_1^*} & \mathbf{h_4^*} & -\mathbf{h_3^*} \end{bmatrix},$$

$E_s$ is the total average energy transmitted over a symbol period, $\mathbf{r_i}$ is the received vector at symbol period $i$ ($i$

= 1, 2), and $\mathbf{n_i}$ is the noise vector at symbol period i. At the receiver end, a linear ZF/MMSE or V-BLAST receiver can be used to decode the received signals, see X. Zhuang, F. W. Vook, S. Rouquette-Leveil, and K. Gosse, "Transmit diversity and spatial multiplexing in fourtransmit-antenna OFDM," in Proceedings of IEEE International Conference on Communications, 2003, vol. 4, pp. 2316-2320. In this article, it is observed that this hybrid MIMO transmission scheme provides more robustness to the channel correlation comparing to the pure SM transmission.

The idea of hybrid MIMO transmission has also been proposed by Texas Instruments in the 3GPP standardization body, see Texas Instruments, "Improved Double-STTD schemes using asymmetric modulation and antenna shuffling," *TSGR1#20(09)-0459.* In this paper, it is suggested to take into account the long-term channel statistics and shuffle the transmit antennas to obtain further performance improvement. Antenna shuffling means that the symbols encoded in the hybrid MIMO transceiver scheme are allocated to the transmitter antennas based on information available at the receiver end, in the present case information about the long-term channel statistics. For this purpose, a feedback loop is established between the receiver end and the transmitter end of the MIMO system.

In S. Shim, K. Kim, and C. Lee, "An efficient antenna shuffling scheme for a DSTTD system," *IEEE Communication Letters,* vol. 9, no. 2, pp. 124-126, February 2005 (see also EP 1 505 758 A1), another antenna shuffling approach is proposed to minimize the BER of the ZF or MMSE receivers based on maximizing the minimum post-processing signal-to-noise (SNR) ratio using the long-term channel information.

WO 2005/069 505 discloses an antenna shuffling scheme in which the signal to interference noise ratio (SINR) is determined for each of the antenna pairs. The calculation of the SINR is based on a Minimum Mean Square Error (MMSE) reception algorithm. In the scheme proposed therein only information about the antenna pair having the greatest SINR is used as a feedback signal.

However, the proposed hybrid MIMO transmission schemes using antenna shuffling do not take the instantaneous channel state information into account, and do not provide optimal balance between the diversity gain and the SM gain. When the MIMO channel between the transmitter and receiver does not vary too fast and a small feedback overhead is affordable, the overall system performance (such as capacity, BER, robustness to channel estimation errors) can be further enhanced.

### Short description of the invention

The present invention provides a method as described above which is characterized in that the symbols are encoded in two space-time coding groups for parallel transmission using spatial multiplexing, each of the two space-time coding groups comprising two symbols encoded using the Alamouti scheme, and the two space-time coding groups are allocated to two sets $M_1$, $M_2$ of pairs of transmitter antennas which maximize the instantaneous capacity of the effective MIMO channel matrix determined by:

$$[M_1, M_2] = \arg\max_{M_1, M_2} \log_2 \det(\mathbf{I}_4 + \frac{\rho}{4} \mathbf{H}_{hyb}^H \mathbf{H}_{hyb}),$$

where det·-) denotes determinant, $(\cdot)^H$ is the Hermitian transpose, p is the average SNR at the receive side, and $M_1$ and $M_2$ represent two sets of antenna pairs. The Alamouti scheme is a special type of space-time coding for two antennas which is advantageous due to its low decoding complexity. The righthand side of the above equation represents the instantaneous capacity of the hybrid MIMO transceiver scheme which is maximized over the all possible sets of antenna pairs.

The present invention further provides a transmitter, a receiver, and a MIMO system, all of which potentially allow for transmission of data with higher data rate and reduced BER. Compared to the state of the art, this approach is more robust to channel estimation errors, as the instantaneous channel state information is taken into account. In fact, the proposed approach achieves the maximum capacity for the hybrid MIMO transmission scheme and achieves the largest possible data rate that the hybrid MIMO transmission scheme can provide.

Below, a simple example to illustrate the benefits of antenna shuffling using instantaneous channel information is given for the above case of four transmitter antennas, using two receiver antennas. Note that the matrix **H** given below represents the extreme case and does not correspond to a real channel matrix. Assume the channel matrix **H** and its effective MIMO channel matrix $H_{hyb}$ can be written as

$$\mathbf{H} = \begin{bmatrix} 1 & 0 & 1 & 0 \\ 0 & 1 & 0 & 1 \end{bmatrix} \qquad \mathbf{H}_{hyb} = \begin{bmatrix} 1 & 0 & 1 & 0 \\ 0 & 1 & 0 & 1 \\ 0 & -1 & 0 & -1 \\ 1 & 0 & 1 & 0 \end{bmatrix}.$$

If one shuffles the second transmitter antenna and the third transmitter antenna, the new matrix J and its effective MIMO channel matrix $J_{hyb}$ is:

$$\mathbf{J} = \begin{bmatrix} 1 & 1 & 0 & 0 \\ 0 & 0 & 1 & 1 \end{bmatrix} \qquad \mathbf{J}_{hyb} = \begin{bmatrix} 1 & 1 & 0 & 0 \\ 0 & 0 & 1 & 1 \\ 1 & -1 & 0 & 0 \\ 0 & 0 & 1 & -1 \end{bmatrix}.$$

Obviously, $\mathbf{H_{hyb}}$ only has rank two while the shuffled matrix $\mathbf{J_{hyb}}$ has full rank. This indicates the original effective MIMO channel $\mathbf{H_{hyb}}$ cannot support four data symbols in two consecutive symbol periods or time slots, respectively, while the shuffled channel effective MIMO channel matrix $\mathbf{J_{hyb}}$ can transmit four data symbols in two time slots. Assume p= 100, the capacity for antenna pairs $M_1$, $M_2$ = {($T_1$, $T_2$), ($T_3$, T4)} is 13.3, and the capacity for antenna pairs $M_1$, $M_2$ = {($T_1$, $T_3$), ($T_2$, $T_4$)} is 22.7, where $T_1$ to $T_4$ denote transmitter antennas. Hence, in the present case, $M_1$, $M_2$ = {($T_1$, $T_3$), ($T_2$, $T_4$)} is selected as the optimal choice for the allocation, if only these two matrices are considered.

The invention is also realized in a transmitter for a MIMO system, comprising: encoding means for generating a plurality of encoded symbols using a combination of space-time coding and spatial multiplexing in a hybrid MIMO transceiver scheme which can be expressed using an effective MIMO channel matrix, allocation means for allocating the plurality of encoded symbols to four transmitter antennas of the transmitter for transmitting, in at least two symbol periods, the plurality of encoded symbols allocated to the transmitter antennas to a plurality of receiver antennas at a receiver end of the MIMO system, and receiving means for receiving a feedback signal comprising information about the instantaneous MIMO channel matrix that can be used to form the effective MIMO channel matrix from a receiver end of the MIMO system in a feedback loop. The encoding means are adapted to generate four encoded symbols , the encoded symbols being grouped into two space-time coding groups for parallel transmission using spatial multiplexing, each of the two space-time coding groups comprising two symbols encoded using the Alamouti scheme, and the allocation means are adapted to allocate the two space-time coding groups to the two sets $M_1$, $M_2$ of pairs of transmitter antennas which maximize the instantaneous capacity of the effective hybrid MIMO channel matrix determined by:

$$[M_1, M_2] = \arg\max_{M_1, M_2} \log_2 \det(\mathbf{I}_4 + \frac{\rho}{4}\mathbf{H}_{hyb}^H\mathbf{H}_{hyb}).$$

In the transmitter according to the invention, information about the instantaneous channel state is provided in the feedback signal which is then used to make the optimal choice for the allocation within the allocation means. In this way, the optimal allocation between antenna pairs and space-time coding groups can be found.

In a further preferred embodiment, the receiving means are adapted to receive a feedback signal comprising information about the instantaneous MIMO channel matrix that can be used to form the effective MIMO channel matrix, e.g. containing the entries of the instantaneous channel matrix which can then be used in the allocation means to make the optimal choice for the allocation between the symbols and the transmitter antennas.

The invention is further realized in a receiver for a MIMO system, comprising: at least two receiver antennas for receiving, in at least two symbol periods, a plurality of encoded symbols from a transmitter end of the MIMO system, the plurality of symbols being encoded using a combination of space-time coding and spatial multiplexing in a hybrid MIMO transceiver scheme which can be expressed using an effective hybrid MIMO channel matrix, and decoding means for decoding the plurality of encoded symbols. The decoding means are adapted to decode four encoded symbols, the encoded symbols being grouped into two space-time coding groups and transmitted using spatial multiplexing, each of the two space-time coding groups comprising two symbols encoded using the Alamouti scheme, and the allocation determination means are adapted to allocate the two space-time coding groups to the two sets of pairs of transmitter antennas which maximize the instantaneous capacity of the effective hybrid MIMO channel matrix determined by:

$$[M_1, M_2] = \underset{M_1, M_2}{\arg \max} \log_2 \det(\mathbf{I}_4 + \frac{\rho}{4} \mathbf{H}^H_{hyb} \mathbf{H}_{hyb}) ,$$

thus allowing an optimal allocation in the case of four transmitter antennas.

In this case, the calculation of the optimal allocation is performed at the receiver end of the MIMO system. This is advantageous, as only the result of the allocation has to be transmitted from the receiver end to the transmitter end of the MIMO system, thus reducing the feedback overhead compared to the case where the calculation of the optimal allocation is performed at the transmitter end. In the latter case, the entries of the MIMO channel matrix have to be transmitted as a feedback signal, thus increasing the number of bits required for the transmission.

In a further preferred embodiment, the receiver further comprises feedback signal generation means for generating a feedback signal containing information about the result of the allocation, the feedback signal generation means preferably being adapted to generate a feedback signal with three bits. In case that four transmitter antennas are used, the antenna shuffling decision can be made at the receiver side among six candidates, which can be signalled using three bits. Hence, only a small overhead with three bits is required to send this decision back to the transmitter in a closed-loop system.

In a further preferred embodiment, the receiver is a linear receiver, in particular a ZF or MMSE receiver, or a non-linear receiver, preferably a VBLAST receiver, in particular a VBLAST-ZF or VBLAST-MMSE receiver. The approach described above is flexible, as it is applicable to both linear and non-linear receivers.

The invention is further realized in a MIMO system comprising: a transmitter as described above at a transmitter end of the MIMO system, or a receiver as described above at a receiver end of the MIMO system, the MIMO system further comprising signalling means for providing a feedback signal containing information about the result of the allocation or about the instantaneous MIMO channel matrix that can be used to form the effective MIMO channel matrix from the receiver end to the transmitter end of the MIMO system. In the MIMO system as described above, there are two alternative locations for determining the optimal allocation: At the transmitter end or at the receiver end. The person skilled in the art will appreciate that it is also possible to transmit information about the instantaneous channels from the receiver end to a third location within the MIMO system where the calculation of the optimal allocation may be performed as described above. The result of the allocation may then be transmitted from the third location to the transmitter end.

Further characteristics and advantages of the invention are provided in the following description of exemplary embodiments of the invention, with reference to the figures of the drawing, which shows details that are significant in the context of the invention, and in the claims. The individual characteristics can be implemented individually by themselves, or several of them can be implemented in any desired combination in a variant of the invention.

Drawing

The invention is shown in the drawing.

**Fig. 1**       shows a first embodiment of a MIMO system according to the invention in which an optimal allocation is determined at the receiver end,

**Fig. 2**       shows a second embodiment of a MIMO system according to the invention in which an optimal allocation is determined at the transmitter end, and

**Figs. 3a,b**   show diagrams representing the Bit-Error-Ratio of hybrid MIMO transmission in dependence of the Signal-to-Noise-Ratio with and without antenna shuffling.

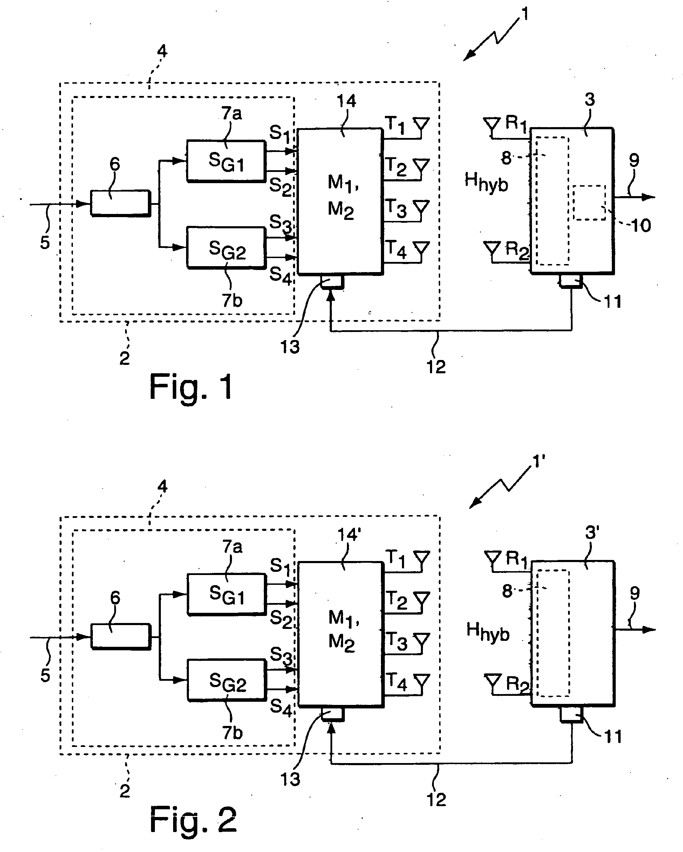

**Fig. 1** shows a MIMO system **1** with a transmitter **2** at a transmitter end which comprises four transmitter antennas $\mathbf{T}_1$ to $\mathbf{T}_4$ for transmitting four encoded symbols $\mathbf{s}_1$ to $\mathbf{s}_4$ to two receiver antennas $\mathbf{R}_1, \mathbf{R}_2$ of a receiver **3** located at a receiver end of the MIMO system 1. The transmitter 1 comprises an encoding means **4** for encoding symbols provided to the transmitter 1 at an input end **5**. The incoming stream of symbols is first converted for parallel transmission in a serial-to-parallel converter **6**. The symbols are then encoded in two Alamouti encoders **7a, 7b** to form two space-time coding groups $\mathbf{s}_{G1}, \mathbf{s}_{G2}$ for transmission using spatial multiplexing, each of the two space-time coding groups $s_{G1}, s_{G2}$ comprising two of the encoded symbols, i.e. the first coding group $s_{G1}$ comprises the first two encoded symbols $s_1, s_2$, whereas the second coding group $s_{G2}$ comprises the third and fourth encoded symbols $s_3, s_4$. The hybrid MIMO

transceiver scheme which is used for the transmission of the encoded symbols $s_1$ to $s_4$ from the transmitter antennas $T_1$ to $T_4$ to the receiver antennas $R_1$, $R_2$ can be expressed using an effective MIMO channel matrix $H_{hyb}$, as described above.

After transmission of the encoded symbols $s_1$ to $s_4$ to the receiver antennas $R_1$, $R_2$ these are decoded in a decoder **8** within the receiver 3. The receiver 3 is of a non-linear receiver type, namely a VBLAST type, but linear receivers e.g. of the ZF or MMSE type may be used as well. The decoded stream of symbols leaves the receiver 3 at an output end **9** for further processing.

The hybrid MIMO transceiver scheme used for the transmission of the symbols $s_1$ to $s_4$ from the transmitter 2 to the receiver 3 is used for balancing the diversity gain of a pure space-time coding scheme and the spatial multiplexing gain of a pure spatial multiplexing scheme. However, system performance can be further enhanced by antenna shuffling, i.e. by allocating each of the encoded symbols $s_1$ to $s_4$ to one of the transmitter antennas $T_1$ to $T_4$ for each instantaneous channel realization. In the present case, as two groups of symbols $S_{G1}$, $S_{G2}$ are present after each Alamouti encoder 7a, 7b, each group of symbols $S_{G1}$, $S_{G2}$ is allcated to a corresponding antenna pair. For the four transmitter antennas $T_1$ to $T_4$, there are overall six candidates to be selected, i.e. antenna pairs $M_1$, $M_2$ = {$(T_1, T_2)$, $(T_3, T_4)$}, {$(T_1, T_3)$, $(T_2, T_4)$}, {$(T_1, T_4)$, $(T_2, T_3)$}, {$(T_1, T_2)$, $(T_4, T_3)$}, {$(T_1, T_3)$, $(T_4, T_2)$}, and {$(T_1, T_4)$, $(T_3, T_2)$}. Due to the fact that the diversity gain is exploited by using two Alamouti codes within each antenna pair, and the multiplexing gain is obtained through spatial multiplexing over two antenna pairs, by selecting the best antenna pairs, optimal balance between the diversity gain and the SM gain can be obtained.

The optimal sets of antenna pairs $M_1$, $M_2$ are those which maximize the instantaneous capacity of the effective MIMO channel matrix $H_{hyb}$, i.e.:

$$[M_1, M_2] = \arg\max_{M_1,M_2} \log_2 \det(\mathbf{I}_4 + \frac{\rho}{4}\mathbf{H}_{hyb}^H\mathbf{H}_{hyb}).$$

The person skilled in the art will appreciate that instead of using the above equation, in a real system where the exact value of the capacity is not a concern, the above equation may be simplified to reduce the computation complexity, e.g. as follows:

$$[M_1, M_2] = \arg\max_{M_1,M_2} \det(\mathbf{I}_4 + \frac{\rho}{4}\mathbf{H}_{hyb}^H\mathbf{H}_{hyb}),$$

since the $\log_2 (\cdot)$ is an increasing function.

The determination of the optimal set of antenna pairs M1, M2 according to the above equation is performed in an allocation determination means **10** of the receiver 3. The result of the determination is provided to the transmitter 2 by generating a feedback signal in a feedback signal generation means **11** within the receiver 3. The feedback signal comprises only three bits for each symbol period, corresponding to the number of possible sets of antenna pairs, as described above. As long as the instantaneous channels are stationary, no further feedback signal needs to be generated, as the optimal allocation does not change in this case. However, for each different instantaneous channel realization, a corresponding feedback signal has to be generated, which is transmitted from the receiver 3 to the transmitter 2 using a signalling means **12** of the MIMO system 1, e.g. via some higher layer signalling or uplink feedback channel, and received in the transmitter 2 in a corresponding receiving means **13**. The transmitter 2 comprises allocation means **14** for allocating the encoded symbols $S_1$ to $S_4$ of the two space-time coding groups $S_{G1}$, $S_{G2}$ to the corresponding transmitter antennas $T_1$ to $T_4$ according to the result of the allocation.

**Fig. 2** shows a MIMO system **1'** which differs from the MIMO system 1 of Fig. 1 in that the determination of the optimal attribution of antenna pairs to encoded symbols is performed within the transmitter **2'**. In this case, the receiver **3'** only collects information about the entries of the instantaneous MIMO channel matrix and transfers this information to the transmitter 2' using the feedback signal generation means 11 and the signalling means 12 of the MIMO system 1'. The calculation of the optimal allocation scheme is performed in the allocation means **14'** of the transmitter, in the way described above. For the implementation shown in Fig. 2, the feedback overhead is increased as compared to the implementation shown in Fig. 1, which may be tolerable in indoor or metropolitan areas where the fading is not too fast, and the feedback overhead is comparatively small. The person skilled in the art will appreciate that the calculation of the optimal allocation scheme based on the instantaneous channel information may be performed at any location within a MIMO system, i.e. is not restricted to the implementations shown above, performing the calculation at the receiver end (Fig. 1) or the transmitter end (Fig. 2).

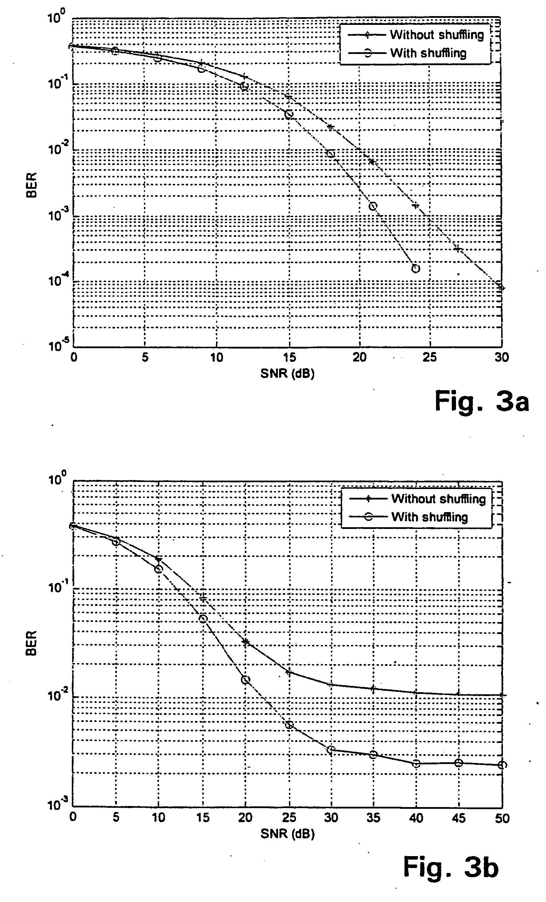

For illustrating the performance of the hybrid MIMO transceiver scheme using antenna shuffling, **Figs. 3a,b** show Monte-Carlo simulations to compare the hybrid MIMO transmission scheme with and without antenna shuffling for 4x2 MIMO systems. For this purpose, 1000 complex independently identically distributed (i.i.d.) Gaussian channel realizations have been generated. The channels are assumed to be stationary for eight successive symbol periods. A V-BLAST MMSE receiver has been used for the simulations. The modulation scheme used for the hybrid schemes is 16-QAM. It is clearly shown in Fig. 3a that the hybrid scheme with antenna shuffling (lower curve) gives a lower BER compared to the hybrid scheme without antenna shuffling (upper curve).

In real systems, the channel estimation errors are inevitable. A popular channel estimation error model is to model the elements of the channel estimation error matrix using i.i.d. zero mean complex Gaussian variables, i.e.

$$\hat{\mathbf{H}} = \sqrt{1-\varepsilon^2}\,\mathbf{H} + \varepsilon\tilde{\mathbf{H}},$$

where $\hat{\mathbf{H}}$ is the estimated MIMO channel matrix, $\tilde{\mathbf{H}}$ is the normalized i.i.d. zero mean complex Gaussian channel estimation error matrix, and the parameter $\varepsilon \in [0,1]$ measures the accuracy of channel estimation. Note that $\varepsilon = 0$ means no channel estimation error exists while $\varepsilon = 1$ indicates a complete failure of channel estimation.

Using the above MIMO channel estimation error model, the robustness to the channel estimation errors is investigated for the hybrid MIMO transmission schemes with and without antenna shuffling for $\varepsilon = 0.1$. Fig. 3b clearly shows that the hybrid scheme with antenna shuffling (lower curve) is more robust to small channel estimation errors than the scheme without antenna shuffling (upper curve). The error floor for the scheme with antenna shuffling is just at BER $2.5 \times 10^{-3}$, which is lower than $10^{-2}$ of the error floor for the scheme without antenna shuffling.

Although the allocation scheme is described above with respect to MIMO systems 1, 1' using four transmitter antennas $T_1$ to $T_4$ and two receiver antennas $R_1$, $R_2$, those skilled in the art will appreciate that the number of transmitter antennas and receiver antennas may vary depending on the type of broadband system and, in particular, more than two receiver antennas may be used. No matter the number of antennas, the optimal allocation is always the one which maximizes the capacity of the instantaneous effective MIMO channel matrix $H_{hyb}$.

In summary, by exploiting the instantaneous channel state information, the antenna shuffling method for closed-loop MIMO systems as described above optimally determines the best pairs of transmitter antennas for hybrid MIMO transmission. By determining the optimal antenna pairs at the receiver side based on effective MIMO channel capacity, the approach only requires a small feedback overhead from the receiver to the transmitter, and theoretically can achieve maximum data rate for MIMO systems using a hybrid transmission scheme. Moreover, the new method reduces the BER and makes the system more robust to the channel estimation errors.

## Claims

1. Method for transmitting, in at least two symbol periods, a plurality of encoded symbols ($S_1$ to $S_4$) from a plurality of transmitter antennas ($T_1$ to $T_4$) at a transmitter end of a MIMO system (1, 1') to a plurality of receiver antennas ($R_1$, $R_2$) at a receiver end of the MIMO system (1, 1'), the symbols ($S_1$ to $S_4$) being encoded using a combination of space-time coding and spatial multiplexing in a hybrid MIMO transceiver scheme which can be expressed using an effective MIMO channel matrix ($H_{hyb}$), the method comprising the steps of: allocating the encoded symbols ($S_1$ to $S_4$) to the transmitter antennas ($T_1$ to $T_4$) based on information provided from the receiver end to the transmitter end of the MIMO system (1, 1') in a feedback loop, and transmitting the encoded symbols ($S_1$ to $S_4$) allocated to the transmitter antennas ($T_1$ to $T_4$) from the transmitter end to the receiver end of the MIMO system (1, 1'), whereby the symbols ($S_1$ to $S_4$) are encoded in two space-time coding groups ($S_{G1}$; $S_{G2}$) for parallel transmission using spatial multiplexing, each of the two space-time coding groups ($S_{G1}$; $S_{G2}$) comprising two symbols ($S_1$, $S_2$; $S_3$, $S_4$) encoded using the Alamouti scheme, and the two space-time coding groups ($S_{G1}$; $S_{G2}$) are allocated to the two sets ($M_1$, $M_2$) of pairs of transmitter antennas ($T_1$ to $T_4$) **characterized by** maximizing the instantaneous capacity of the effective MIMO channel matrix ($H_{hyb}$) determined by:

$$[M_1, M_2] = \underset{M_1, M_2}{\arg\max}\ \log_2 \det(\mathbf{I}_4 + \frac{\rho}{4}\mathbf{H}_{hyb}^H \mathbf{H}_{hyb}),$$

wherein p is the average SNR at the receive side.

2. Transmitter (2') for a MIMO system (1'), comprising:

encoding means (4) for generating a plurality of encoded symbols ($S_1$ to $S_4$) using a combination of space-time coding and spatial multiplexing in a hybrid MIMO transceiver scheme which can be expressed using an effective MIMO channel matrix ($H_{hyb}$), allocation means (14') for allocating the plurality of encoded symbols ($S_1$ to $S_4$) to four transmitter antennas ($T_1$ to $T_4$) of the transmitter (2') for transmitting, in at least two symbol periods, the plurality of encoded symbols ($S_1$ to $S_4$) to a plurality of receiver antennas ($R_1$, $R_2$) at a receiver end of the MIMO system (1'), and receiving means (13) for receiving a feedback signal comprising information about the instantaneous MIMO channel matrix that can be used to form the effective MIMO channel matrix ($H_{hyb}$) from a receiver end of the MIMO system (1') in a feedback loop, whereby

the encoding means (4) are adapted to generate four encoded symbols ($S_1$ to $S_4$), the encoded symbols ($S_1$ to $S_4$) being grouped into two space-time coding groups ($S_{G1}$, $S_{G2}$) for parallel transmission using spatial multiplexing,

each of the two space-time coding groups ($S_{G1}$, $S_{G2}$) comprising two symbols ($S_1$, $S_2$; $S_3$, $S_4$) encoded using the Alamouti scheme, and wherein the allocation means (14') are adapted to allocate the two space-time coding groups ($S_{G1}$; $S_{G2}$) to the two sets ($M_1$, $M_2$) of pairs of transmitter antennas ($T_1$ to $T_4$) **characterized by** maximizing the instantaneous capacity of the effective hybrid MIMO channel matrix ($H_{hyb}$) determined by:

$$[M_1, M_2] = \arg\max_{M_1, M_2} \log_2 \det(\mathbf{I}_4 + \frac{\rho}{4} \mathbf{H}_{hyb}^H \mathbf{H}_{hyb}),$$

wherein p is the average SNR at the receive side.

3. Transmitter according to claim 2, wherein the receiving means (13) are adapted to receive a feedback signal comprising information about the instantaneous MIMO channel matrix that can be used to form the effective MIMO channel matrix ($H_{hyb}$).

4. Receiver (3) for a MIMO system (1), comprising:

at least two receiver antennas ($R_1$, $R_2$) for receiving, in at least two symbol periods, a plurality of encoded symbols ($S_1$ to $S_4$) from a transmitter end of the MIMO system (1), the plurality of symbols ($S_1$ to $S_4$) being encoded using a combination of space-time coding and spatial multiplexing in a hybrid MIMO transceiver scheme which can be expressed using an effective hybrid MIMO channel matrix ($H_{hyb}$), and decoding means (8) for decoding the plurality of encoded symbols ($S_1$ to $S_4$),

whereby

the decoding means (8) are adapted to decode four encoded symbols ($S_1$ to $S_4$), the encoded symbols ($S_1$ to $S_4$) being grouped into two space-time coding groups ($S_{G1}$, $S_{G2}$) and transmitted using spatial multiplexing, each of the two space-time coding groups ($S_{G1}$, $S_{G2}$) comprising two symbols ($S_1$, $S_2$); ($S_3$, $S_4$)) encoded using the Alamouti scheme, and wherein allocation determination means (10) are adapted to allocate the two space-time coding groups ($S_{G1}$; $S_{G2}$) to the two sets ($M_1$, $M_2$) of pairs of transmitted antennas ($T_1$ to $T_4$) at a transmitter end of the MIMO system (1) **characterized by** maximizing the instantaneous capacity of the effective hybrid MIMO channel matrix ($H_{hyb}$) determined by:

$$[M_1, M_2] = \arg\max_{M_1, M_2} \log_2 \det(\mathbf{I}_4 + \frac{\rho}{4} \mathbf{H}_{hyb}^H \mathbf{H}_{hyb}),$$

wherein p is the average SNR at the receive side.

5. Receiver according to claim 4, further comprising feedback signal generation means (11) for generating a feedback signal containing information about the result of the allocation, the feedback signal generation means (11) preferably being adapted to generate a feedback signal with three bits.

6. Receiver according to claim 4, wherein the receiver (3, 3') is a linear receiver, in particular a ZF or MMSE receiver, or a non-linear receiver, preferably a VBLAST receiver, in particular a VBLAST-ZF or VBLAST-MMSE receiver.

7. MIMO system (1,1') comprising:

a transmitter (2') according to claim 2 at a transmitter end of the MIMO system (1'), or a receiver (3) according to claim 4 at a receiver end of the MIMO system (1), the MIMO system (1, 1') further comprising signalling means (12) for providing a feedback signal containing information about the result of the allocation or about the instantaneous MIMO channel matrix that can be used to form the effective MIMO channel matrix ($H_{hyb}$) from the receiver end to the transmitter end of the MIMO system (1, 1').

**Patentansprüche**

1. Verfahren zur Übertragung, in mindestens zwei Symboldauern, einer Mehrzahl von codierten Symbolen ($S_1$ bis $S_4$) von einer Mehrzahl von Sendeantennen ($T_1$ bis $T_4$) auf einer Sendeseite eines MIMO-Systems (1, 1') an eine Mehrzahl von Empfangsantennen ($R_1$, $R_2$) auf einer Empfangsseite des MIMO-Systems (1, 1'), wobei die Symbole ($S_1$ bis $S_4$) unter Verwendung einer Kombination von Raum-Zeit-Codierung und räumlichem Multiplexing in einem hybriden MIMO-Transceiver-Schema, welches unter Verwendung einer effektiven MIMO-Kanalmatrix ($H_{hyb}$) wiedergegeben werden kann, codiert werden, wobei das Verfahren die folgenden Schritte umfasst: Zuweisen der codierten Symbole ($S_1$ bis $S_4$) an die Sendeantennen ($T_1$ bis $T_4$) auf der Basis von von der Empfangsseite an die Sendeseite des MIMO-Systems (1, 1') in einer Rückkopplungsschleife bereitgestellten Informationen, und Übertragen der den Sendeantennen ($T_1$ bis $T_4$) zugewiesenen codierten Symbole ($S_1$ bis $S_4$) von der Sendeseite an die Empfangsseite des MIMO-Systems (1, 1'), wobei die Symbole ($S_1$ bis $S_4$) für die parallele Übertragung unter Verwendung von räumlichem Multiplexing in zwei Raum-Zeit-Codierungsgruppen ($S_{G1}$; $S_{G2}$) codiert werden, wobei eine jede der zwei Raum-Zeit-Codierungsgruppen ($S_{G1}$; $S_{G2}$) zwei unter Verwendung des Alamouti-Schemas codierte Symbole ($S_1$, $S_2$; $S_3$, $S_4$) umfasst, und wobei die zwei Raum-Zeit-Codierungsgruppen ($S_{G1}$; $S_{G2}$) den zwei Sätzen ($M_1$, $M_2$) von Sendeantennenpaaren ($T_1$ bis $T_4$) zugewiesen werden, **gekennzeichnet durch** das Maximieren der momentanen Kapazität der effektiven MIMO-Kanalmatrix ($H_{hyb}$), bestimmt **durch**:

$$[M_1, M_2] = \underset{M_1, M_2}{\arg\max} \log_2 \det(\mathbf{I_4} + \frac{\rho}{4} H_{hyb}^{H} H_{hyb})$$

wobei p das durchschnittliche Signal-Rausch-Verhältnis, SNR, auf der Empfangsseite ist.

2. Sender (2') für ein MIMO-System (1'), umfassend:

Codiermittel (4) zum Erzeugen einer Mehrzahl von codierten Symbolen ($S_1$ bis $S_4$) unter Verwendung einer Kombination von Raum-Zeit-Codierung und räumlichem Multiplexing in einem hybriden MIMO-Transceiver-Schema, welches unter Verwendung einer effektiven MIMO-Kanalmatrix ($H_{hyb}$) wiedergegeben werden kann, Zuweisungsmittel (14') zum Zuweisen der Mehrzahl von codierten Symbolen ($S_1$ bis $S_4$) an vier Sendeantennen ($T_1$ bis $T_4$) des Senders (2') für die Übertragung, in mindestens zwei Symboldauern, der Mehrzahl von codierten Symbolen ($S_1$ bis $S_4$) an eine Mehrzahl von Empfangsantennen ($R_1$, $R_2$) auf einer Empfangsseite des MIMO-Systems (1'), und Empfangsmittel (13) zum Empfangen eines Rückkopplungssignals, welches Informationen über die momentane MIMO-Kanalmatrix, die für das Bilden der effektiven MIMO-Kanalmatrix ($H_{hyb}$) verwendet werden können, enthält, von einer Empfangsseite des MIMO-Systems (1') in einer Rückkopplungsschleife, wobei die Codiermittel (4) für das Erzeugen von vier codierten Symbolen ($S_1$ bis $S_4$) ausgelegt sind, wobei die codierten Symbole ($S_1$ bis $S_4$) für die parallele Übertragung unter Verwendung von räumlichem Multiplexing in zwei Raum-Zeit-Codierungsgruppen ($S_{G1}$, $S_{G2}$) gruppiert werden, wobei eine jede der zwei Raum-Zeit-Codierungsgruppen ($S_{G1}$, $S_{G2}$) zwei unter Verwendung des Alamouti-Schemas codierte Symbole ($S_1$, $S_2$; $S_3$, $S_4$) umfasst, und wobei die Zuweisungsmittel (14') für das Zuweisen der zwei Raum-Zeit-Codierungsgruppen ($S_{G1}$; $S_{G2}$) an die zwei Sätze ($M_1$, $M_2$) von Sendeantennenpaaren ($T_1$ bis $T_4$) ausgelegt sind, **gekennzeichnet durch** das Maximieren der momentanen Kapazität der effektiven hybriden MIMO-Kanalmatrix ($H_{hyb}$), bestimmt **durch**:

$$[M_1, M_2] = \underset{M_1, M_2}{\arg\max} \log_2 \det(\mathbf{I_4} + \frac{\rho}{4} H_{hyb}^{H} H_{hyb})$$

wobei p das durchschnittliche Signal-Rausch-Verhältnis, SNR, auf der Empfangsseite ist.

3. Sender nach Anspruch 2, wobei die Empfangsmittel (13) für den Empfang eines Rückkopplungssignals, welches Informationen über die momentane MIMO-Kanalmatrix, die für das Bilden der effektiven MIMO-Kanalmatrix ($H_{hyb}$)

verwendet werden können, ausgelegt sind.

4. Empfänger (3) für ein MIMO-System (1), umfassend:

Mindestens zwei Empfangsantennen ($R_1$, $R_2$) zum Empfangen, in mindestens zwei Symboldauern, einer Mehrzahl von codierten Signalen ($S_1$ bis $S_4$) von einer Sendeseite des MIMO-Systems (1), wobei die Mehrzahl von Symbolen ($S_1$ bis $S_4$) unter Verwendung einer Kombination von Raum-Zeit-Codierung und räumlichem Multiplexing in einem hybriden MIMO-Transceiver-Schema, welches unter Verwendung einer effektiven hybriden MIMO-Kanalmatrix ($H_{hyb}$) wiedergegeben werden kann, codiert werden, und Decodiermittel (8) zum Decodieren der Mehrzahl von codierten Symbolen ($S_1$ bis $S_4$),
wobei
die Decodiermittel (8) für das Decodieren der vier codierten Symbole ($S_1$ bis $S_4$) ausgelegt sind, wobei die codierten Symbole ($S_1$ bis $S_4$) in zwei Raum-Zeit-Codierungsgruppen ($S_{G1}$, $S_{G2}$) gruppiert und unter Verwendung von räumlichem Multiplexing übertragen werden, wobei eine jede der zwei Raum-Zeit-Codierungsgruppen ($S_{G1}$, $S_{G2}$) zwei unter Verwendung des Alamouti-Schemas codierte Symbole (($S_1$, $S_2$); ($S_3$, $S_4$)) umfasst, und wobei Zuweisungsbestimmungsmittel (10) für das Zuweisen der zwei Raum-Zeit-Codierungsgruppen ($S_{G1}$; $S_{G2}$) an die zwei Sätze ($M_1$, $M_2$) von Sendeantennenpaaren ($T_1$ bis $T_4$) an einer Sendeseite des MIMO-Systems (1) ausgelegt sind, **gekennzeichnet durch** das Maximieren der momentanen Kapazität der effektiven hybriden MIMO-Kanalmatrix ($H_{hyb}$), bestimmt **durch**:

$$[M_1, M_2] = \arg\max_{M_1, M_2} \log_2 \det\left(\mathbf{I}_4 + \frac{\rho}{4} H_{hyb}^H H_{hyb}\right)$$

wobei p das durchschnittliche Signal-Rausch-Verhältnis, SNR, an der Empfangsseite ist.

5. Empfänger nach Anspruch 4, weiterhin umfassend Rückkopplungssignalerzeugungsmittel (11) zum Erzeugen eines Rückkopplungssignals, welches Informationen über das Ergebnis der Zuweisung enthält, wobei die Rückkopplungssignalerzeugungsmittel (11) vorzugsweise für das Erzeugen eines Rückkopplungssignals mit drei Bits ausgelegt sind.

6. Empfänger nach Anspruch 4, wobei der Empfänger (3, 3') ein linearer Empfänger, insbesondere ein ZF- oder MMSE-Empfänger, oder ein nicht linearer Empfänger, vorzugsweise ein VBLAST-Empfänger, insbesondere ein VBLAST-ZF- oder VBLAST-MMSE-Empfänger, ist.

7. MIMO-System (1, 1'), umfassend:

Einen Sender (2') gemäß Anspruch 2 auf einer Sendeseite des MIMO-Systems (1'),
oder einen Empfänger (3) gemäß Anspruch 4 auf einer Empfangsseite des MIMO-Systems (1), wobei das MIMO-System (1, 1') weiterhin Signalisierungsmittel (12) zum Bereitstellen eines Rückkopplungssignals, welches Informationen über das Ergebnis der Zuweisung oder über die momentane MIMO-Kanalmatrix, die für das Bilden der effektiven MIMO-Kanalmatrix ($H_{hyb}$) verwendet werden können, enthält, von der Empfangsseite an die Sendeseite des MIMO-Systems (1, 1') umfasst.

**Revendications**

1. Procédé pour la transmission, dans au moins deux périodes de symbole, d'une pluralité de symboles codés ($s_1$ à $s_4$) entre une pluralité d'antennes émettrices ($T_1$ à $T_4$) au niveau d'une extrémité émettrice d'un système MIMO (1, 1') et une pluralité d'antennes réceptrices ($R_1$, $R_2$) au niveau d'une extrémité réceptrice du système MIMO (1, 1'), les symboles ($s_1$ à $s_4$) étant codés en utilisant une combinaison de codage spatio-temporel et de multiplexage dans l'espace dans un schéma d'émetteur-récepteur MIMO hybride qui peut être exprimé en utilisant une matrice de canal MIMO efficace ($H_{hyb}$), le procédé comprenant les étapes suivantes : attribuer les symboles codés ($s_1$ à $s_4$) aux antennes émettrices ($T_1$ à $T_4$) sur la base d'informations fournies entre l'extrémité réceptrice et l'extrémité émettrice du système MIMO (1, 1') dans une boucle de rétroaction, et transmettre les symboles codés ($s_1$ à $s_4$) attribués aux antennes émettrices ($T_1$ à $T_4$) entre l'extrémité émettrice et l'extrémité réceptrice du système MIMO (1, 1'), au moyen duquel
les symboles ($s_1$ à $s_4$) sont codés en deux groupes de codage spatio-temporel ($s_{G1}$ ; $s_{G2}$) pour une transmission parallèle en utilisant le multiplexage dans l'espace, chacun des deux groupes de codage spatio-temporel ($s_{G1}$ ; $s_{G2}$) comprenant deux symboles ($s_1$, $s_2$ $s_3$, $s_4$) codés en utilisant le schéma d'Alamouti, et les deux groupes de codage spatio-temporel ($s_{G1}$ $s_{G2}$) sont attribués aux deux ensembles ($M_1$, $M_2$) de paires d'antennes émettrices ($T_1$ to $T_4$) **caractérisées par** la maximisation de la capacité instantanée de la matrice de canal MIMO efficace ($H_{hyb}$) déterminée par :

$$[M_1, M_2] = \underset{M_1, M_2}{\arg\max} \log_2 \det\left(\mathbf{I_4} + \frac{\rho}{4} H_{hyb}^H H_{hyb}\right),$$

où p est le SNR moyen au niveau du côté de réception.

**2.** Émetteur (2') pour un système MIMO (1'), comprenant :

moyens de codage (4) pour générer une pluralité de symboles codés ($s_1$ à $s_4$) en utilisant une combinaison de codage spatio-temporel et de multiplexage dans l'espace dans un schéma d'émetteur-récepteur MIMO hybride qui peut être exprimé en utilisant une matrice de canal MIMO efficace ($H_{hyb}$), des moyens d'attribution (14') pour attribuer la pluralité de symboles codés ($s_1$ à $s_4$) à quatre antennes émettrices ($T_1$ à $T_4$) de l'émetteur (2') pour transmettre, dans au moins deux périodes de symbole, la pluralité de symboles codés ($s_1$ à $s_4$) à une pluralité d'antennes réceptrices ($R_1$, $R_2$) au niveau d'une extrémité réceptrice du système MIMO (1'), et des moyens de réception (13) pour recevoir un signal de rétroaction comprenant des informations sur la matrice de canal MIMO instantanée qui peuvent être utilisées pour former la matrice de canal MIMO efficace ($H_{hyb}$) à partir d'une extrémité réceptrice du système MIMO (1') dans une boucle de rétroaction, au moyen duquel les moyens de codage (4) sont adaptés pour générer quatre symboles codés ($s_1$ à $s_4$), les symboles codés ($s_1$ à $s_4$) étant regroupés en deux groupes de codage spatio-temporel ($s_{G1}$ ; $s_{G2}$) pour la transmission parallèle en utilisant le multiplexage dans l'espace, chacun des deux groupes de codage spatio-temporel ($s_{G1}$ ; $s_{G2}$) comprenant deux symboles ($s_1$, $s_2$ $s_3$, $s_4$) codés en utilisant le schéma d'Alamouti, et dans lequel les moyens d'attribution (14') sont adaptés pour attribuer les deux groupes de codage spatio-temporel ($s_{G1}$ ; $s_{G2}$) aux deux ensembles ($M_1$, $M_2$) de paires d'antennes émettrices ($T_1$ à $T_4$) **caractérisées par** la maximisation de la capacité instantanée de la matrice de canal MIMO hybride efficace ($H_{hyb}$) déterminée par :

$$[M_1, M_2] = \underset{M_1, M_2}{\arg\max} \log_2 \det\left(\mathbf{I_4} + \frac{\rho}{4} H_{hyb}^H H_{hyb}\right)$$

où p est le SNR moyen au niveau du côté de réception.

**3.** Émetteur selon la revendication 2, dans lequel les moyens de réception (13) sont adaptés pour recevoir un signal de rétroaction comprenant des informations sur la matrice de canal MIMO instantanée qui peuvent être utilisées pour former la matrice de canal MIMO efficace ($H_{hyb}$).

**4.** Récepteur (3) pour un système MIMO (1), comprenant :

au moins deux antennes réceptrices ($R_1$, $R_2$) pour recevoir, dans au moins deux périodes de symbole, une pluralité de symboles codés ($s_1$ à $s_4$) à partir d'une extrémité émettrice du système MIMO (1), la pluralité de symboles ($s_1$ à $s_4$) étant codée en utilisant une combinaison de codage spatio-temporel et de multiplexage dans l'espace dans un schéma d'émetteur-récepteur MIMO hybride qui peut être exprimé en utilisant une matrice de canal MIMO hybride efficace ($H_{hyb}$), et des moyens de décodage (8) pour décoder la pluralité de symboles codés ($s_1$ à $s_4$),
au moyen duquel
les moyens de décodage (8) sont adaptés pour décoder quatre symboles codés ($s_1$ à $s_4$), les symboles codés ($s_1$ à $s_4$) étant regroupés en deux groupes de codage spatio-temporel ($s_{G1}$, $s_{G2}$) et transmis en utilisant le multiplexage dans l'espace, chacun des deux groupes de codage spatio-temporel ($s_{G1}$, $s_{G2}$) comprenant deux symboles (($s_1$, $s_2$) ; ($s_3$, $s_4$)) codés en utilisant le schéma d'Alamouti, et dans lequel les moyens de détermination d'attribution (10) sont adaptés pour attribuer les deux groupes de codage spatio-temporel ($s_{G1}$; $s_{G2}$) aux deux ensembles ($M_1$, $M_2$) de paires d'antennes émettrices ($T_1$ à $T_4$) au niveau d'une extrémité émettrice du système MIMO (1) **caractérisées par** la maximisation de la capacité instantanée de la matrice de canal MIMO hybride efficace ($H_{hyb}$) déterminée par :

$$[M_1, M_2] = \arg\max_{M_1, M_2} \log_2 \det\left(I_4 + \frac{\rho}{4} H_{hyb}^H H_{hyb}\right)$$

où p est le SNR moyen au niveau du côté de réception.

5. Récepteur selon la revendication 4, comprenant en outre des moyens de génération de signal de rétroaction (11) pour générer un signal de rétroaction comprenant des informations sur le résultat de l'attribution, les moyens de génération de signal de rétroaction (11) étant de préférence adaptés pour générer un signal de rétroaction avec trois bits.

6. Récepteur selon la revendication 4, dans lequel le récepteur (3, 3') est un récepteur linéaire, en particulier un récepteur ZF ou MMSE, ou un récepteur non-linéaire, de préférence un récepteur VBLAST, en particulier un récepteur VBLAST-ZF ou VBLAST-MMSE.

7. Système MIMO (1,1') comprenant:

un émetteur (2') selon la revendication 2 au niveau d'une extrémité émettrice du système MIMO (1'), ou un récepteur (3) selon la revendication 4 au niveau d'une extrémité réceptrice du système MIMO (1), le système MIMO (1, 1') comprenant en outre des moyens de signalisation (12) pour fournir un signal de rétroaction comprenant des informations sur le résultat de l'attribution ou sur la matrice de canal MIMO instantanée qui peuvent être utilisées pour former la matrice de canal MIMO efficace ($H_{hyb}$) entre l'extrémité réceptrice et l'extrémité émettrice du système MIMO (1,1').

Fig. 1

Fig. 2

**Fig. 3a**

**Fig. 3b**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1505758 A1

**Non-patent literature cited in the description**

- **X. ZHUANG ; F. W. VOOK ; S. ROUQUETTE-LEVEIL ; K. GOSSE.** Transmit diversity and spatial multiplexing in fourtransmit-antenna OFDM. *Proceedings of IEEE International Conference on Communications,* 2003, vol. 4, 2316-2320